# EUROPÄISCHE PATENTANMELDUNG

(11) **EP 0 897 051 A1**
(43) Veröffentlichungstag der Anmeldung: **17.02.1999**
(21) Anmeldenummer: 98112647.7
(22) Anmeldetag: 08.07.1998
(51) Int. Cl.: F01N 3/22, F01N 7/00, F02D 41/22, F01N 9/00

(54) **Verfahren und Vorrichtung zur Überprüfung der Funktionsfähigkeit einer Sekundärluftpumpe**

(30) Priorität: 14.08.1997 DE 19735318
(71) Anmelder: Bayerische Motoren Werke Aktiengesellschaft, 80788 München (DE)
(72) Erfinder: Oeller, Heinz, 85293 Reichertshausen (DE)

(57) **Zusammenfassung**

Bei einem Verfahren zur Überprüfung der Funktionsfähigkeit einer Sekundärluftpumpe (8) bei einer Brennkraftmaschine (5) in Kraftfahrzeugen mittels eines elektronischen Steuergerätes (6) werden vom Steuergerät die Drehzahl (n) der Brennkraftmaschine und der Drosselklappenwinkel (DK) im Ansaugtrakt der Brennkraftmaschine erfaßt. Mittels eines im Steuergerät abgespeicherten Kennfeldes wird in Abhängigkeit von der erfaßten Drehzahl und dem erfaßten Drosselklappenwinkel der Luftmassenstrom in die Zylinder der Brennkraftmaschine geschätzt. Mittels eines Luftmassenmessers (3) wird der Gesamt-Luftmassenstrom gemessen, der sich aus dem Luftmassenstrom in die Zylinder der Brennkraftmaschine und aus dem über die Sekundärluftleitung (9) in den Abgaskanal geförderten Sekundär-Luftmassenstrom zusammensetzt. Anschließend wird die Differenz zwischen dem Gesamt-Luftmassenstrom und dem Luftmassenstrom in die Zylinder der Brennkraftmaschine ausgewertet.

## Beschreibung

Die Erfindung bezieht sich auf ein Verfahren zur Überprüfung der Funktionsfähigkeit einer Sekundärluftpumpe bei einer Brennkraftmaschine nach dem Oberbegriff des Patentanspruchs 1.

Ein derartiges Verfahren ist beispielsweise aus der DE 43 43 639 A1 bekannt. Grundlage des Verfahrens ist eine Vorrichtung zum Einblasen von Frischluft in den Abgaskanal zwischen Brennkraftmaschine und Katalysator bei Kraftfahrzeugen, um den Katalysator möglichst schnell auf Betriebstemperatur zu bringen. Durch die exotherme Reaktion zwischen dem Abgas und der eingeblasenen Frischluft im Abgaskanal kommt es zu einer beschleunigten Aufheizung des Katalysators. Im Sinne einer möglichst geringen Schadstoffemission wird angestrebt, den Katalysator möglichst schnell auf seine Betriebstemperatur aufzuheizen. Hierfür ist eine ordnungsgemäß arbeitende Sekundärluftpumpe erforderlich. Bei dem aus der DE 43 43 639 A1 bekannten Verfahren wird die Funktionsfähigkeit des Sekundärluftsystems einschließlich der Sekundärluftpumpe anhand des vom Sekundärluftsystem erzeugten Luftmassenstroms (Sekundärluftstrom) beurteilt. Hierzu wird eine den Sekundärluftstrom kennzeichnende Größe u. a. aus dem Luft-/Kraftstoff-Verhältnis des von der Brennkraftmaschine angesaugten Gemisches und aus dem stromabwärts von der Einmündung der Sekundärluftleitung im Abgaskanal herrschenden Luft-/Kraftstoff-Verhältnis ermittelt. Zur Ermittlung der Luft-/Kraftstoff-Verhältnisse wird eine ohnehin vorhandene Lambda-Sonde eingesetzt. Das bekannte Verfahren zur Überprüfung der Funktionsfähigkeit des Sekundärluftsystems kann demnach erst dann begonnen werden, wenn die Lambda-Sonde betriebsbereit ist. Üblicherweise ist jedoch die Lambda-Sonde erst dann betriebsbereit, wenn ein Einblasen der Frischluft mittels der Sekundärluftpumpe zum Aufheizen des Katalysators nicht mehr erforderlich ist. Bereits einige Sekunden nach einem Kaltstart der Brennkraftmaschine ist durch die eingeschaltete Sekundärluftpumpe der HC- und der CO-Anteil der Abgase derart reduziert, daß die Sekundärluftpumpe bereits ausgeschaltet werden könnte. Nach dem bekannten Verfahren ist demnach eine längere Laufzeit der Sekundärluftpumpe erforderlich, um lediglich die Sekundärluftpumpendiagnose durchführen zu können. Eine längere Laufzeit der Sekundärluftpumpe bewirkt jedoch zum einen einen erhöhten NOx-Anteil im Abgas sowie zum anderen eine stark reduzierte Lebensdauer der Sekundärluftpumpe.

Es ist Aufgabe der Erfindung, ein Verfahren zur Überprüfung der Funktionsfähigkeit einer Sekundärluftpumpe bei einer Brennkraftmaschine zu schaffen, das unabhängig von der Betriebsbereitschaft der Lambda-Sonde ist.

Diese Aufgabe wird durch die kennzeichnenden Merkmale des Patentanspruchs 1 gelöst.

Eine vorteilhafte Vorrichtung zur Durchführung des erfindungsgemäßen Verfahrens ist Gegenstand des Patentanspruchs 2.

Erfindungsgemäß werden von einem elektronischen Steuergerät, vorzugsweise dem Brennkraftmaschinensteuergerät, die Drehzahl der Brennkraftmaschine und der Drosselklappenwinkel im Ansaugtrakt der Brennkraftmaschine erfaßt. Mittels eines im Steuergerät abgespeicherten Kennfeldes wird anschließend in Abhängigkeit von der erfaßten Drehzahl und dem erfaßten Drosselklappenwinkel der Luftmassenstrom in die Zylinder der Brennkraftmaschine geschätzt. Weiterhin wird mittels eines ohnehin vorhandenen Luftmassenmessers der Gesamt-Luftmassenstrom gemessen, der sich aus dem Luftmassenstrom in die Zylinder der Brennkraftmaschine und aus dem über die Sekundärluftleitung in den Abgaskanal geförderten Sekundär-Luftmassenstrom zusammensetzt. Anschließend wird die Differenz zwischen dem Gesamt-Luftmassenstrom und dem Luftmassenstrom in die Zylinder der Brennkraftmaschine ausgewertet. Vorzugsweise wird dabei überprüft, ob der Gesamt-Luftmassenstrom größer als der Luftmassenstrom in die Zylinder der Brennkraftmaschine ist.

Eine vorteilhafte Vorrichtung zur Durchführung des Verfahrens weist als Sekundärluftleitung einen Bypass zum Ansaugtrakt auf, durch den der Sekundär-Luftmassenstrom mittels der Sekundärluftpumpe vom Ansaugtrakt in den Abgaskanal gefördert wird. Der Eingang des Bypasses zweigt nach dem Luftmassenmesser und vor der Drosselklappe im Ansaugtrakt ab.

Durch das erfindungsgemäße Verfahren und durch die erfindungsgemäße Vorrichtung kann die Funktionsfähigkeit der Sekundärluftpumpe bzw. des Sekundärluftsystems unabhängig von der Lambda-Sonde überprüft werden, so daß die Betriebsbereitschaft der Lambda-Sonde nicht abgewartet werden muß. Die Überprüfung der Funktionsfähigkeit der Sekundärluftpumpe kann somit unmittelbar nach einem Kaltstart durchgeführt werden. Dadurch ist auch die Einschaltdauer der Sekundärluftpumpe ausschließlich abhängig von der Betriebstemperatur des Katalysators, so daß durch eine reduzierte Betriebsdauer auch die Lebensdauer der Sekundärluftpumpe erhöht wird.

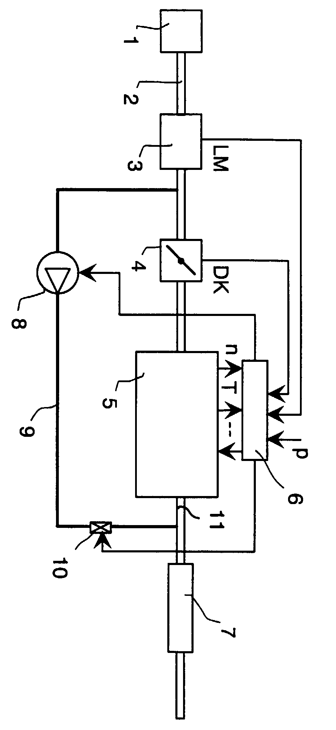

In der Zeichnung ist ein Ausführungsbeispiel der Erfindung dargestellt. Sie zeigt schematisch den Ansaugtrakt sowie den Abgaskanal einer Brennkraftmaschine mit einer Sekundärluftsystemanordnung, mittels der das erfindungsgemäße Verfahren bevorzugt durchgeführt werden kann.

Im Ansaugtrakt 2 der Brennkraftmaschine 5 sind ein Luftfilter 1 mit einem Luftmassenmesser 3, der Luftmassenmesser 3 mit einer Drosselklappe 4 und die Drosselklappe 4 direkt mit der Brennkraftmaschine 5 verbunden. Der Brennkraftmaschine 5 ist ein elektronisches Steuergerät 6 zugeordnet. Am Ausgang der Brennkraftmaschine 5 schließt der Abgaskanal 11 an, der einen Katalysator 7 aufweist. Zwischen dem Luftmassenmesser 3 und der Drosselklappe 4 im Ansaugtrakt 2 zweigt der Eingang einer Sekundärluftleitung 9 in Form eines Bypasses ab. Der Ausgang der Sekundärluftleitung 9 führt in den Abgaskanal 11. Der Sekundär-Luftmassenstrom wird mittels der Sekundärluftpumpe 8 gefördert. Ein Ventil 10 ist ausgangsseitig in der Sekundärluftleitung 9 angeordnet, um zum einen bei ausgeschalteter Sekundärluftpumpe 8 den Abgaskanal 11 abzudichten und zum anderen die Dosierung des Sekundär-Luftmassenstroms zu beeinflussen.

Das elektronische Brennkraftmaschinen-Steuergerät 6 weist elektrische Ein- und Ausgänge auf. An Eingängen des elektronischen Steuergeräts 6 werden u. a. die Drehzahl n der Brennkraftmaschine 5, die Betriebstemperatur T der Brennkraftmaschine 5, der Umgebungsdruck p, der Drosselklappenwinkel DK und ein elektrisches Signal LM des Luftmassenmessers 3 erfaßt. An den Ausgängen des Steuergeräts 6 werden beispielsweise Steuersignale für Aktuatoren der Brennkraftmaschine 5 und insbesondere ein Steuersignal zur Ansteuerung des Ventils 10 sowie ein Steuersignal zur Ansteuerung der Sekundärluftpumpe 8 ausgegeben.

Vorzugsweise beim Kaltstart der Brennkraftmaschine 5 wird zum beschleunigten Aufheizen des Katalysators 7 die Sekundärluftpumpe 8 eingeschaltet und das Ventil 10 geöffnet, um den Sekundär-Luftmassenstrom in den Abgaskanal 11 zu fördern. Sobald die Sekundärluftpumpe 8 eingeschaltet ist, kann die Überprüfung ihrer Funktionsfähigkeit begonnen werden. Grundsätzlich findet die Überprüfung der Funktionsfähigkeit durch die Auswertung der Differenz zwischen dem im Ansaugtrakt 2 angesaugten Gesamt-Luftmassenstrom und dem Luftmassenstrom in die Zylinder der Brennkraftmaschine statt, die bei funktionsfähiger Sekudärluftpumpe 8 gleich dem Sekundär-Luftmassenstrom ist. Der Sekundär-Luftmassenstrom sowie der Luftmassenstrom in die Zylinder der Brennkraftmaschine 5 werden bis zum Eingang der Sekundärluftleitung 9 als Gesamt-Luftmassenstrom über den Ansaugtrakt 2 angesaugt. Dieser Gesamt-Luftmassenstrom im Ansaugtrakt 2 wird mittels des Luftmassenmessers 3 erfaßt. Aus dem elektrischen Signal LM des Luftmassenmessers 3 ermittelt das Steuergerät 6 eine den Gesamt-Luftmassenstrom kennzeichnende Größe. Weiterhin ist im Steuergerät 6 ein Kennfeld abgespeichert, durch das in Abhängigkeit von der erfaßten Drehzahl n und dem erfaßten Drosselklappenwinkel DK eine den Luftmassenstrom in die Zylinder der Brennkraftmaschine kennzeichnende Größe bildet. Diese Größe kann vorzugsweise in Abhängigkeit von der Betriebstemperatur T der Brennkraftmaschine und/oder vom Umgebungsdruck p korrigiert werden. Diese Korrektur kann beispielsweise beim jeweils nächsten Kaltstart der Brennkraftmaschine vorgegeben werden. Liegen dabei wiederum geänderte Umgebungsbedingungen (p, T) vor, findet eine erneute Korrektur statt.

Wird vom Steuergerät 6 nicht erkannt, daß der gemessene Gesamt-Luftmassenstrom größer als der Luftmassenstrom in die Zylinder der Brennkraftmaschine ist, wird daraus auf das Vorliegen eines Fehlers, insbesondere auf den Ausfall der Sekundärluftpumpe 8, geschlossen, da in diesem Fall kein Sekudär-Luftmassenstrom aus dem Ansaugtrakt 2 in den Abgaskanal 11 befördert wird.

Ergänzend wird darauf hingewiesen, daß das erfindungsgemäße Verfahren auch bei Brennkraftmaschinen mit zwei Sauganlagen anwendbar ist. Üblicherweise ist bei Brennkraftmaschinen mit zwei Sauganlagen einer ersten Sauganlage ein Sekundärluftsystem zugeordnet, wogegen die zweite Sauganlage nicht mit einem Sekundärluftsystem ausgestattet ist. In diesem Fall wird zur Überprüfung der Funktionsfähigkeit der Sekundärluftpumpe die Differenz zwischen dem Gesamt-Luftmassenstrom im Ansaugtrakt der ersten Sauganlage und dem Luftmassenstrom in die der ersten Sauganlage zugeordneten Zylinder der Brennkraftmaschine gebildet.

Mit dem erfindungsgemäßen Ausführungsbeispiel ist mit nur einem Luftmassenmesser, der ohnehin für die Steuerung der Brennkraftmaschine erforderlich ist, auch der Sekundär-Luftmassenstrom bestimmbar. Da die Einschaltdauer der Sekundärluftpumpe nicht länger als für die Aufheizung des Katalysators erforderlich vorgegeben wird, wird sowohl die Lebensdauer der Sekundärluftpumpe erhöht als auch der erhöhte Anteil einer NOx-Emission verhindert, der durch eine verlängerte Einschaltdauer entstehen würde. Die verkürzte Einschaltdauer der Sekundärluftpumpe wird dadurch erreicht, daß die Betriebsbereitschaft der Lambda-Sonde nicht abgewartet werden muß, da die Überprüfung der Funktionsfähigkeit der Sekundärluftpumpe unabhängig von dem Signal der Lambda-Sonde ist.

## Patentansprüche

1. Verfahren zur Überprüfung der Funktionsfähigkeit einer Sekundärluftpumpe (8) bei einer Brennkraftmaschine (5) in Kraftfahrzeugen mittels eines elektronischen Steuergerätes (6), dadurch gekennzeichnet, daß vom Steuergerät (6) die Drehzahl (n) der Brennkraftmaschine (5) und der Drosselklappenwinkel (DK) im Ansaugtrakt (2) der Brennkraftmaschine (5) erfaßt werden, daß mittels eines im Steuergerät (6) abgespeicherten Kennfeldes in Abhängigkeit von der erfaßten Drehzahl (n) und dem erfaßten Drosselklappenwinkel (DK) der Luftmassenstrom in die Zylinder der Brennkraftmaschine (5) geschätzt wird, daß mittels eines Luftmassenmessers (3) der Gesamt-Luftmassenstrom gemessen wird, der sich aus dem Luftmassenstrom in die Zylinder der Brennkraftmaschine (5) und aus dem über die Sekundärluftleitung (9) in den Abgaskanal (11) geförderten Sekundär-Luftmassenstrom zusammensetzt, und daß die Differenz zwischen dem Gesamt-Luftmassenstrom und dem Luftmassenstrom in die Zylinder der Brennkraftmaschine ausgewertet wird.

2. Vorrichtung zur Durchführung des Verfahrens nach Patentanspruch 1, dadurch gekennzeichnet, daß der Eingang der Sekundärluftleitung (9) in Form eines Bypasses im Ansaugtrakt (2) nach dem Luftmassenmesser (3) und vor der Drosselklappe (4) abzweigt.
